# EUROPEAN PATENT SPECIFICATION

(11) **EP 2 529 984 B1**
(45) Date of publication and mention of the grant of the patent: **14.05.2014**
(21) Application number: 12168908.7
(22) Date of filing: 22.05.2012
(51) Int. Cl.: B60R 25/24, G07C 9/00

(54) **Remote keyless entry relay module and system.**
Fernrelaismodul mit schlüssellosem Zugang und System
Module de relais d'entrée sans clé à distance et système

(30) Priority: 31.05.2011 US 201113118844
(43) Date of publication of application: 05.12.2012
(73) Proprietor: Delphi Technologies, Inc., Troy, MI 48007 (US)
(72) Inventor: Tieman, Craig A., Westfield, IN 46074 (US); Peterson, Mark C., Carmel, IN 46074 (US)
(74) Representative: Robert, Vincent

(56) References cited:
- EP-A2- 1 000 826
- EP-A2- 2 048 627
- EP-A2- 2 048 629
- EP-A2- 2 113 886

## Description

### TECHNICAL FIELD OF INVENTION

The invention generally relates to a communication module for relaying a remote keyless entry command to a vehicle keyless entry receiver, and more particularly relates to a module with a keyless entry transmitter located in the vehicle and configured to transmit a remote keyless entry signal to the vehicle keyless entry receiver.

### BACKGROUND OF INVENTION

Many vehicles are equipped with remote keyless entry (RKE) systems that operate certain aspects of the vehicle in response to a signal from a key fob, such as locking or unlocking the vehicle doors, or starting the vehicle. However, the range of these key fobs is typically limited, and vehicle operator's must carry and maintain the key fob along with other electronic devices most people already carry, such as a personal communication device.

EP-A-1000826 discloses a module and system in accordance with the preamble of Claims 1 and 5 respectively.

### SUMMARY OF THE INVENTION

Aspects of the invention are disclosed in independent claims 1 and 15.

In an embodiment of the present invention, a communication system for relaying a remote keyless entry command from a personal communications device to a vehicle keyless entry receiver is provided. The system includes a personal communication device, a cellular network receiver, and a keyless entry transmitter. The personal communication device is configured to send a remote keyless entry command via a cellular network. The cellular network receiver is located in a vehicle. The cellular network receiver is configured to receive the remote keyless entry command from the cellular network. The keyless entry transmitter is located in the vehicle and is in communication with the cellular network receiver. The keyless entry transmitter is configured to transmit a remote keyless entry signal to a vehicle keyless entry receiver in the vehicle in order to execute a vehicle operation. The remote keyless entry signal corresponds to the command message.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is block diagram of a remote keyless entry system in accordance with one embodiment; and

Fig. 2 is block diagram of a relay module of Fig. 1 in accordance with one embodiment.

### DESCRIPTION OF THE PREFERRED EMBODIMENTS

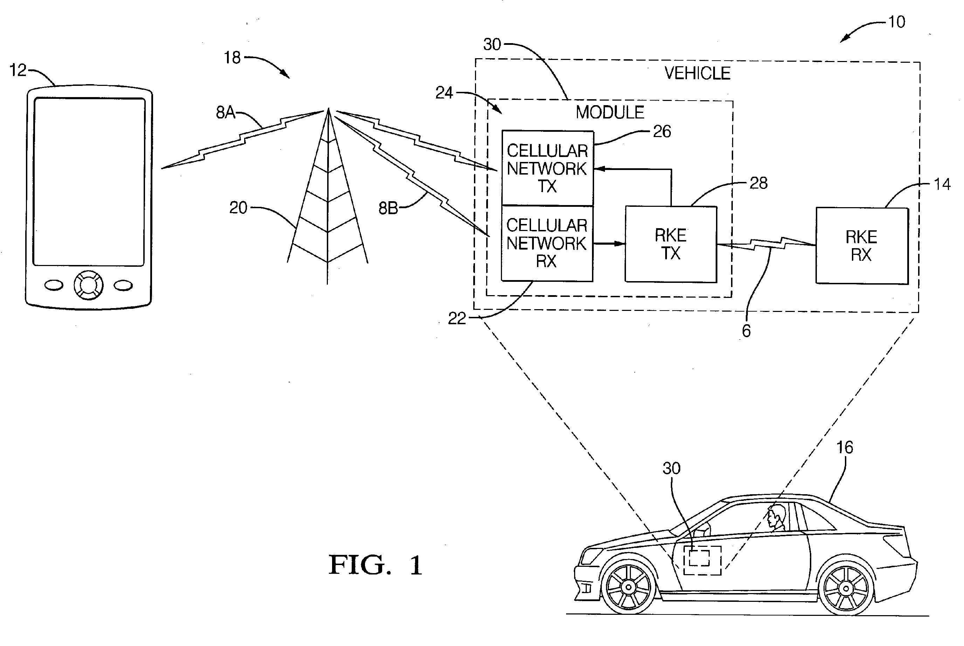

Fig. 1 illustrates a communication system 10 for relaying a remote keyless entry (RKE) command 8A, 8B from a personal communications device (PCD) 12 to a vehicle keyless entry receiver 14 that is within a vehicle 16. The vehicle keyless entry receiver 14 will typically be part of a factory installed, original equipment manufacturer (OEM) remote keyless entry system. However, as will become apparent, the system 10 will also interface with after-market remote keyless entry systems. Non-limiting examples of RKE commands include, but are not limited to: a lock doors command, an unlock door command, a start engine command, a flash lights command, and a sound horn command.

In general, the PCD 12 is configured to send a RKE command 8A to the cellular network 18, and the cellular network retransmits the RKE command 8B. The PCD 12 may be, for example, but not limited to, a cellular phone, personal data assistant (PDA), a smart phone such as a Blackberry® or iPhone®, or other such devices. The cellular network 18 may be a distributed network of communication nodes typically associated with a cellular phone network, where one of these nodes may be an antenna tower 20, as illustrated in Fig. 1. Alternatively, the cellular network 18 may include or be formed by a network of internet communication nodes such as a network of Wi-Fi™ hot spots (not shown), or may include or be a network satellites (not shown).

The system 10 includes a cellular network receiver 22 that is located in the vehicle 16. In general, the cellular network receiver 22 is configured to receive a RKE command 8B from the cellular network 18. The cellular network receiver 22 may be part of a cellular network transceiver 24 that includes a cellular network transmitter 26. A suitable example of a cellular network transceiver is a radioOne® RF Processor from Qualcomm. The cellular network transceiver 24 may be assigned a phone number if the system 10 is communicating with a cell phone network, or may be assigned an Internet Protocol address (IP address) if the system 10 is communicating with a network of Wi-Fi™ hot spots.

The system 10 includes a keyless entry transmitter 28 located in the vehicle 16 and in communication with the cellular network receiver 22, for example via wires, fiber optics, or other suitable signal conductor. In general, the keyless entry transmitter 28 is configured to transmit a radio frequency type remote keyless entry signal 6 to the vehicle keyless entry receiver 14 that is also located in the vehicle 16, in order to execute a vehicle operation such as: lock the vehicle doors, unlock a vehicle door, start the vehicle engine, flash the vehicle lights, or sound the vehicle horn. As such, the remote keyless entry signal 6 transmitted by the keyless entry transmitter 28 may be characterized as corresponding to the RKE command 8A, 8B transmitted by the PCD 12 and retransmitted by the cellular network 18, respectively.

The cellular network receiver 22 and the keyless entry transmitter 28 may be assembled together to form an in-vehicle communication module 30 for relaying the remote keyless entry command 8B from the cellular network 18 to the vehicle keyless entry receiver 14. As used herein, the term relaying generally means receiving a wireless signal conveying information at one carrier frequency, and transmitting at least part of or a reformatted version of the information at a different carrier frequency. For example, the remote keyless entry command 8B, may characterized as conveying information and having a first carrier frequency typically associated with cellular networks, and the remote keyless entry signal 6 may be characterized as conveying at least part of that information at a second carrier frequency typically associated with remote keyless entry systems.

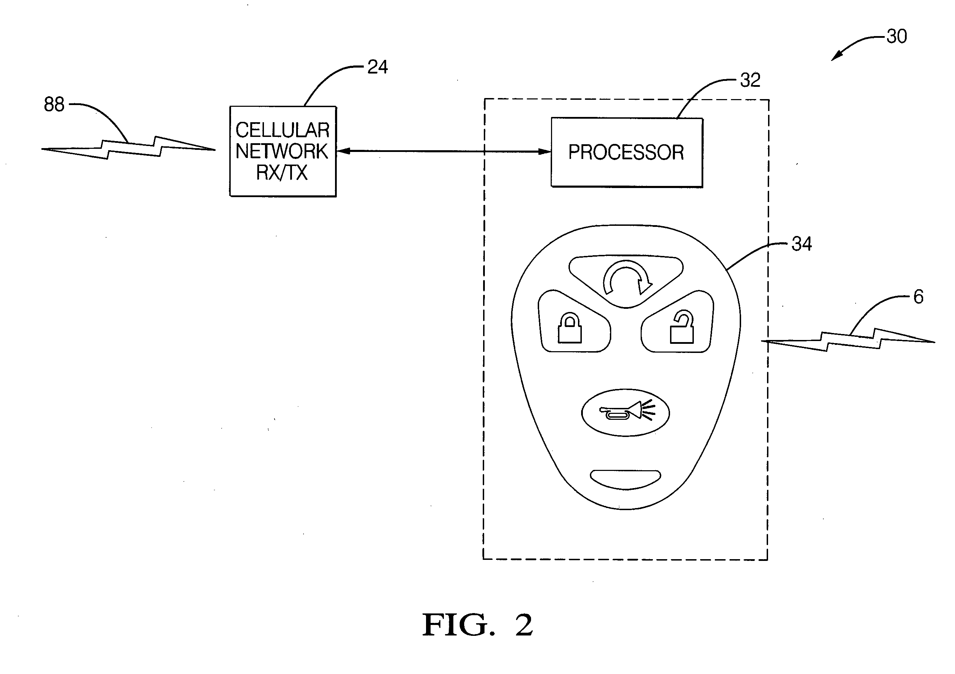

Fig. 2 illustrates a non-limiting example of the module 30. The module 30 may include a processor 32 such as a microprocessor or other control circuitry as should be evident to those in the art. The processor 32 may include memory, including non-volatile memory, such as electrically erasable programmable read-only memory (EEPROM) for storing one or more routines, thresholds and captured data. The one or more routines may be executed by the processor 32 to perform steps for determining if signals received by the cellular network transceiver 24 are valid for executing a vehicle operation as described herein.

Fig. 2 illustrates the keyless entry transmitter 28 as including an actual key fob, but this is only for the purpose of explanation and not limitation. In one embodiment, the key fob 34 may actually be a programmable transmitter that transmits the remote keyless entry signal 6 according to settings received from the processor 32. In another embodiment, a circuit board assembly may be removed from the key fob 34 and electrically connected to the processor by way of pressure based electrical contacts or by soldering wires to the circuit board assembly. While not specifically shown in Fig. 2, it is well known that such a circuit board assembly has contact pads that physically align with the buttons illustrated on the key fob 34. In yet another embodiment the processor may operate mechanical actuators (not shown) that press the buttons of the key fob in order to transmit a remote keyless entry signal 6.

For any of the embodiments described above, the keyless entry transmitter 28 transmits a remote keyless entry signal 6 that is essentially the same as what would be transmitted when a person pressed a button on a remote keyless entry key fob in their possession. Because of this feature, the module 30 may be installed almost anywhere in the vehicle 16 in order to enable the PCD 12 to execute various vehicle operations such as those described above. Since many vehicles are assembled with factory installed remote keyless entry (RKE) systems that provide the vehicle keyless entry receiver 14, adding the module 30 is little more than providing a source of power for the module 30, programming the module 30 with a phone number so the cellular network 18 can establish communication with the cellular network receiver 22, and programming the keyless entry transmitter 28 with the necessary codes so the vehicle keyless entry receiver 14 recognizes the remote keyless entry signal 6 as being authorized to execute a vehicle operation. This programming may be by way of connecting the module 30 to a personal computer (not shown), or for the case where the key fob 34 is actually a programmable transmitter, by way of the module 'learning' the codes from the remote keyless entry system in the vehicle, where this learning method is known.

The processor 32 may also be configured to send messages to the cellular network 18 by way of the cellular network transmitter 26 that may be part of the cellular network transceiver 24. As such, the module 30 may be configured to send a confirmation message to the PCD 12 via to the cellular network 18 for providing confirmation that a remote keyless entry command 8B was received.

In an alternative embodiment, the cellular network transceiver 24 may be replaced by a short range transceiver such as a Bluetooth™ transceiver, and communication to the cellular network 18 may be by way of a second personal communication device located in the vehicle 16, or an in-vehicle cellular radio (not shown), such as an On-Star® in-vehicle cellular radio. As such, the module 30 may be configured to communicate with cellular network 18 via an in-vehicle cellular radio.

Accordingly, a system 10, a module 30 for relaying a remote keyless entry command 8A, 8B from a cellular network 18 to a vehicle keyless entry receiver 14 is provided. The system 10 and module 30 have a particular advantage over systems having a wired data communication path to the vehicle 10 because determining the proper wiring connection and command codes for a wired connection can be very time consuming and expensive, particularly if the vehicle manufacturer is not cooperative. By making use of an already installed remote keyless access system via the vehicle keyless entry receiver 14, the engineering cost may be reduced, and the installation can be very simple.

## Claims

1. An in-vehicle communication module (30) for relaying a remote keyless entry command (8B) from a cellular network (18) to a vehicle keyless entry receiver (14), said module comprising:
a cellular network receiver (22) configured to receive a remote keyless entry command (8B) from a cellular network (18); and
a remote keyless entry transmitter (28) located in the vehicle (16) and in communication with the cellular network receiver (22), wherein said remote keyless entry transmitter (28) is configured to transmit wirelessly a remote keyless entry signal (6) to a vehicle keyless entry receiver (14) in the vehicle (16) in order to execute a vehicle operation, wherein the remote keyless entry signal (6) corresponds to the remote keyless entry command (8B); **characterized in that** the remote keyless entry transmitter (28) includes a remote keyless entry key fob circuit board assembly of a remote keyless entry key fob (34), wherein the module (30) is coupled to the remote keyless entry key fob circuit board assembly in a manner effective for the module (30) to operate the remote keyless entry key fob circuit board assembly to transmit wirelessly a remote keyless entry signal (6).

2. The module (30) in accordance with claim 1, wherein the module (30) is configured to communicate with cellular network (18) via an in-vehicle cellular radio.

3. The module (30) in accordance with claim 1, wherein the remote keyless entry command (8A) originates from a personal communication device (12) in communication with the cellular network (18).

4. The module (30) in accordance with claim 1, wherein the module (30) is configured to send a confirmation message to the cell phone network (18).

5. A communication system (10) for relaying a remote keyless entry command (8A) from a personal communications device (12) to a vehicle keyless entry receiver (14), said system (10) comprising:
a personal communication device (12) configured to send a remote keyless entry command (8A) via a cellular network (18);
a cellular network receiver (22) located in a vehicle (16), said cellular network receiver (22) configured to receive the remote keyless entry command (8B) from the cellular network (18); and
a remote keyless entry transmitter (28) located in the vehicle and in communication with the cellular network receiver (22), wherein said remote keyless entry transmitter (28) is configured to transmit wirelessly a remote keyless entry signal (6) to a vehicle keyless entry receiver (14) in the vehicle (16) in order to execute a vehicle operation, wherein the remote keyless entry signal (6) corresponds to the command message (8A, 8B); **characterized in that** the transmitter (28) includes a remote keyless entry key fob circuit board assembly of a remote keyless entry key fob (34), wherein the cellular network receiver (22) is coupled to the remote keyless entry key fob circuit board assembly in a manner effective for the cellular network receiver (22) to operate the remote keyless entry key fob circuit board assembly to transmit wirelessly a remote keyless entry signal.

6. The system (10) in accordance with claim 5, wherein the system (10) further comprises a cellular network transmitter (26) configured to send a confirmation message to the personal communication (12) device via the cellular network (18).

## Patentansprüche

1. Ein Kommunikationsmodul (30) im Fahrzeug zum Weiterleiten eines "schlüsselloser Fern-Zugang"-Befehls (8B) von einem zellularen Netzwerk (18) an einen Fahrzeug-"schlüsselloser Zugang"-Empfänger (14), wobei das Modul aufweist:
einen "zellulares Netzwerk"-Empfänger (22), der konfiguriert ist zum Empfangen eines "schlüsselloser Fern-Zugang"-Befehls (8B) von einem zellularen Netzwerk (18); und
einen "schlüsselloser Fern-Zugang"-Sender (28), der sich in dem Fahrzeug (16) befindet und in Kommunikation mit dem "zellulares Netzwerk"-Empfänger (22) ist, wobei der "schlüsselloser Fern-Zugang"-Sender (28) konfiguriert ist zum drahtlosen Senden eines "schlüsselloser Fern-Zugang"-Signals (6) an einen Fahrzeug-"schlüsselloser Zugang"-Empfänger (14) in dem Fahrzeug (16), um eine Fahrzeugoperation auszuführen, wobei das "schlüsselloser Fern-Zugang"-Signal (6) dem "schlüsselloser Fern-Zugang"-Befehl (8B) entspricht; **dadurch gekennzeichnet, dass** der "schlüsselloser Fern-Zugang"-Sender (28) eine "schlüsselloser Fem-Zugang"-Schlüsselanhänger-Leiterplattebaugruppe eines "schlüsselloser Fern-Zugang"-Schlüsselanhängers (34) umfasst, wobei das Modul (30) mit der Leiterplattebaugruppe des "schlüsselloser Fern-Zugang"-Schlüsselanhängers auf eine Weise gekoppelt ist, damit das Modul (30) die Leiterplattebaugruppe des "schlüsselloser Ufern-Zugang"-Schlüsselanhängers effektiv betreiben kann, um ein "schlüsselloser Fern-Zugang"-Signal (6) drahtlos zu senden.

2. Das Modul (30) gemäß Anspruch 1, wobei das Modul (30) konfiguriert ist zum Kommunizieren mit dem zellularen Netzwerk (18) über eine zellulare Funkeinrichtung in dem Fahrzeug.

3. Das Modul (30) gemäß Anspruch 1, wobei der "schlüsselloser Fern-Zugang"-Befehl (8A) von einer persönlichen Kommunikationsvorrichtung (12) in Kommunikation mit dem zellularen Netzwerk (18) stammt.

4. Das Modul (30) gemäß Anspruch 1, wobei das Modul (30) konfiguriert ist zum Senden einer Bestätigungsnachricht an das zellulare Telefon-Netzwerk (18).

5. Ein Kommunikationssystem (10) zum Weiterleiten eines "schlüsselloser Fern-Zugang"-Befehls (8A) von einer persönlichen Kommunikationsvorrichtung (12) an einen Fahrzeug-"schlüsselloser Zugang"-Empfänger (14), wobei das System (10) aufweist:
eine persönliche Kommunikationsvorrichtung (12), die konfiguriert ist zum Senden eines "schlüsselloser Fern-Zugang"-Befehls (8A) über ein zellulares Netzwerk (18);
einen "zellulares Netzwerk"-Empfänger (22), der sich in einem Fahrzeug (16) befindet, wobei der "zellulares Netzwerk"-Empfänger (22) konfiguriert ist zum Empfangen des "schlüsselloser Fern-Zugang"-Befehls (8B) von dem zellularen Netzwerk (18); und
einen "schlüsselloser Fern-Zugang"-Sender (28), der sich in dem Fahrzeug befindet und in Kommunikation mit dem "zellulares Netzwerk"-Empfänger (22) ist, wobei der "schlüsselloser Fern-Zugang"-Sender (28) konfiguriert ist zum drahtlosen Senden eines "schlüsselloser Fern-Zugang"-Signals (6) an einen Fahrzeug-"schlüsselloser Zugang"-Empfänger (14) in dem Fahrzeug (16), um eine Fahrzeugoperation auszuführen, wobei das "schlüsselloser Fern-Zugang"-Signal (6) der Befehlsnachricht (8A, 8B) entspricht; **dadurch gekennzeichnet, dass** der Sender (28) eine "schlüsselloser Fern-Zugang"-Schlüsselanhänger-Leiterplattebaugruppe eines "schlüsselloser Fern-Zugang"-Schlüsselanhängers (34) umfasst, wobei der "zellulares Netzwerk"-Empfänger (22) mit der Leiterplattebaugruppe des "schlüsselloser Fern-Zugang"-Schlüsselanhängers auf eine Weise gekoppelt ist, damit der "zellulares Netzwerk"-Empfänger (22) effektiv die Leiterplattebaugruppe des "schlüsselloser Fern-Zugang"-Schlüsselanhängers betreiben kann, um ein "schlüsselloser Fern-Zugang"-Signal drahtlos zu senden.

6. Das System (10) gemäß Anspruch 5, wobei das System (10) weiter einen "zellulares Netzwerk"-Sender (26) aufweist, der konfiguriert ist zum Senden einer Bestätigungsnachricht über das zellulare Netzwerk (18) an die persönliche Kommunikationsvorrichtung (12).

## Revendications

1. Module de communication embarqué sur véhicule (30) pour relayer un ordre d'entrée sans clé à distance (8B) depuis un réseau cellulaire (18) à un récepteur d'entrée sans clé (14) du véhicule, ledit module comprenant :
un récepteur de réseau cellulaire (22) configuré pour recevoir un ordre d'entrée sans clé à distance (8B) depuis un réseau cellulaire (18) ; et
un émetteur d'entrée sans clé à distance (28) situé dans le véhicule (16) et en communication avec le récepteur de réseau cellulaire (22), dans lequel ledit émetteur d'entrée sans clé à distance (28) est configuré pour émettre sans fil un signal d'entrée sans clé à distance (6) vers un récepteur d'entrée sans clé (14) dans le véhicule (16) afin d'exécuter une opération du véhicule, dans lequel le signal d'entrée sans clé à distance (6) correspond à l'ordre d'entrée sans clé à distance (8B) ; **caractérisé en ce que** l'émetteur d'entrée sans clé à distance (28) inclut un ensemble formant carte à circuit de porte-clés d'entrée sans clé à distance pour un porte-clés d'entrée sans clé à distance (34), dans lequel le module (30) est couplé à l'ensemble formant carte à circuit d'une manière effective pour que le module (30) fasse fonctionner l'ensemble formant carte à circuit de porte-clés d'entrée sans clé à distance afin qu'il émette sans fil un signal d'entrée sans clé à distance (6).

2. Module (30) selon la revendication 1, dans lequel le module (30) est configuré pour communiquer avec un réseau cellulaire (18) via un dispositif radio cellulaire embarqué sur le véhicule.

3. Module (30) selon la revendication 1, dans lequel l'ordre d'entrée sans clé à distance (8A) provient d'un dispositif de communication personnel (12) en communication avec le réseau cellulaire (18).

4. Module (30) selon la revendication 1, dans lequel le module (30) est configuré pour envoyer un message de confirmation au réseau téléphonique cellulaire (18).

5. Système de communication (10) pour relayer un ordre d'entrée sans clé à distance (8A) depuis un dispositif de communication personnel (12) vers un récepteur d'entrée sans clé d'un véhicule (14), ledit système (10) comprenant :
un dispositif de communication personnel (12) configuré pour envoyer un ordre d'entrée sans clé à distance (8A) via un réseau cellulaire (18) ;
un récepteur de réseau cellulaire (22) situé dans un véhicule (16), ledit récepteur de réseau cellulaire (22) étant configuré pour recevoir l'ordre d'entrée sans clé à distance (8B) depuis le réseau cellulaire (18) ; et
un émetteur d'entrée sans clé à distance (28) situé dans le véhicule et en communication avec le récepteur de réseau cellulaire (22), dans lequel ledit émetteur d'entrée sans clé à distance (28) est configuré pour émettre un signal d'entrée sans clé à distance (6) vers un récepteur d'entrée sans clé du véhicule (14) dans le véhicule (16) afin d'exécuter une opération du véhicule, dans lequel le signal d'entrée sans clé à distance (6) correspond au message d'ordre (8A, 8B) ; **caractérisé en ce que** l'émetteur (28) inclut un ensemble formant carte à circuit de porte-clés d'entrée sans clé à distance pour un porte-clés d'entrée sans clé à distance (34), dans lequel le récepteur de réseau cellulaire (22) est couplé à l'ensemble formant carte à circuit du porte-clés d'entrée sans clé à distance d'une manière effective pour que le récepteur de réseau cellulaire (22) fasse fonctionner l'ensemble formant carte à circuit du porte-clés d'entrée sans clé à distance afin d'émettre sans fil un signal d'entrée sans clé à distance.

6. Système (10) selon la revendication 5, dans lequel le système (10) comprend en outre un émetteur de réseau cellulaire (26) configuré pour émettre un message de confirmation au dispositif de communication personnel (12) via le réseau cellulaire (18).
